# DEMANDE DE BREVET EUROPEEN

(11) **EP 1 038 806 A2**
(43) Date de publication de la demande: **27.09.2000**
(21) Numéro de dépôt: 00400781.1
(22) Date de dépôt: 22.03.2000
(51) Int. Cl.: B65G 23/06

(54) **Dispositif de manutention par chaînes et roues dentées coopérantes**

(30) Priorité: 22.03.1999 FR 9903505
(71) Demandeur: Ets Denis, 28160 Brou (FR)
(72) Inventeur: Lizambard Stephane, F-28160 Brou (FR)
(74) Mandataire: Kaspar, Jean-Georges

(57) **Abrégé**

Un dispositif de manutention par chaînes (12) et roues dentées (11) correspondantes comporte au moins une chaîne (12) de manutention entièrement réalisée en matériaux métalliques et formant une boucle fermée et une roue dentée (11) d'entraînement. La roue dentée (11) comporte un nombre de dents disposées selon un espacement inférieur au pas de la majorité des maillons (16) de la chaîne (12). La chaîne (12) entièrement réalisée en matériaux métalliques comporte au moins un maillon (19) de pas différent du pas de la majorité des maillons (16) de la chaîne (12), de manière à décaler les dents travaillantes en vue de réduire leur usure.

## Description

L'invention est relative à un dispositif de manutention par chaînes et roues dentées coopérantes.

On connaît, notamment d'après la norme française enregistrée NFE 26-106 des chaînes de manutention et des roues dentées correspondantes.

On utilise notamment ces moyens de manutention pour le transport de produits en vrac, tels que des céréales ou d'autres produits en grains ou granulés, agricoles ou non agricoles.

Habituellement, les entraînements classiques de chaînes de manutention comportent des pignons moteurs ou "tourteaux" possédant une valeur d'entredent égale au pas de la chaîne, laquelle est généralement entièrement réalisée en matériaux métalliques.

Cette valeur d'entredent est égale à la longueur du côté du polygone primitif défini en page 13 de la norme française enregistrée NFE 26-106.

Il résulte de cette disposition connue que chaque dent du pignon moteur entraîne un maillon de la chaîne, de sorte qu'aucune dent de la chaîne n'est au repos ou non entraînante au cours du mouvement d'entraînement.

Cette disposition conduit à une usure importante des dents de pignon moteur lorsque les chaînes de manutention à entraîner, entièrement réalisées en matériaux métalliques, présentent une longueur importante, ce qui conduit à un remplacement plus fréquent des pignons moteurs ou "tourteaux" que le remplacement de la chaîne entièrement réalisée en matériaux métalliques.

Un but de l'invention est de diminuer l'usure des dents de pignons moteurs ou "tourteaux", de manière à réduire la fréquence de remplacement de ces pignons moteurs.

Un deuxième but de l'invention est de répartir l'usure mécanique régulièrement sur toutes les dents de pignons moteurs ou "tourteaux".

Un troisième but de l'invention est de permettre la maintenance de dispositifs existants en remplaçant uniquement les pignons moteurs ou "tourteaux" et en modifiant uniquement un maillon de la chaîne.

L'invention a pour objet un dispositif de manutention par chaînes et roues dentées coopérantes, du type comportant au moins une chaîne de manutention entièrement réalisée en matériaux métalliques et formant une bande fermée et une roue dentée d'entraînement, caractérisée en ce que la roue dentée comporte un nombre de dents disposées selon un espacement inférieur au pas de la majorité des maillons de la chaîne et en ce que la chaîne comporte au moins un maillon de pas différent du pas de la majorité des maillons de la chaîne, de manière à décaler les dents travaillantes en vue de réduire leur usure.

Selon d'autres caractéristiques de l'invention :
- le pas dudit maillon de pas différent est sensiblement égal à l'espacement de deux dents consécutives de ladite roue dentée,
- le pas dudit maillon de pas différent est voisin d'une fraction du pas de la majorité des maillons de la chaîne,
- la roue dentée comporte un nombre pair de dents espacées selon un espacement correspondant sensiblement au plus petit pas de maillon de la chaîne,
- la roue dentée comporte un nombre pair d'encoches ou gorges d'entraînement d'axes de maillons de chaîne,
- la roue dentée comporte un nombre de dents multiple du nombre de dents d'une roue dentée correspondant au pas de la majorité des maillons de la chaîne,
- la roue dentée comporte un nombre pair de dents,
- ledit pas différent est inférieur au pas de la majorité des maillons de la chaîne,
- ledit pas différent est supérieur au pas de la majorité des maillons de la chaîne.

Selon un mode de réalisation préféré de l'invention, le dispositif comporte au moins une roue dentée comportant au moins un insert en fond de gorge ou d'encoche, de manière à en amortir ou en réduire le bruit de fonctionnement.

L'invention sera mieux comprise grâce à la description qui va suivre donnée à titre d'exemple non limitatif en référence aux dessins annexés dans lesquels :
- la figure 1 représente schématiquement un entraînement de chaîne de manutention de l'art antérieur
- les figures 2 à 9 représentent un entraînement de chaîne de manutention selon l'invention, illustré dans des phases successives de fonctionnement.
- la figure 10 représente schématiquement une vue partielle en perspective d'un mode préféré de réalisation d'un entraînement de chaîne de manutention selon l'invention

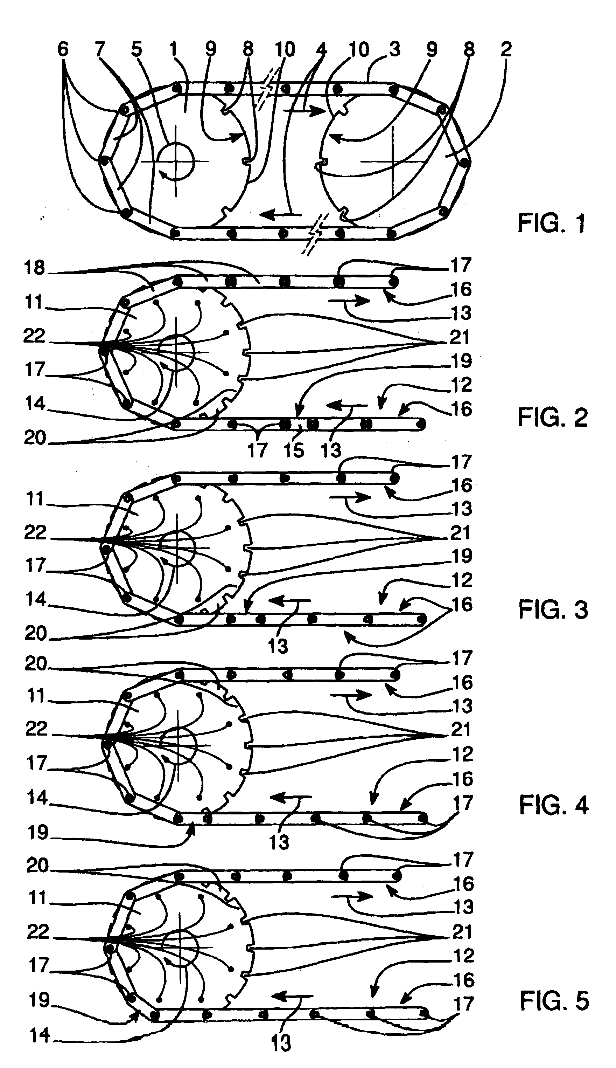

En référence à la figure 1, un entraînement de chaîne de manutention de type connu comporte deux pignons de chaîne 1 et 2 destinés à entraîner une chaîne de manutention 3 formée en boucle continue. Le mouvement de la chaîne s'effectue par exemple dans le sens de la flèche 4, correspondant à une rotation d'entraînement dans le sens de la flèche 5.

La chaîne 3 est de préférence entièrement réalisée en matériaux métalliques et présente des maillons avec des axes 6 régulièrement espacés et reliés par des plaques latérales 7 de longueurs égales.

Chaque tourteau 1 ou 2 comporte des encoches 8 régulièrement espacées selon un pas correspondant au pas des axes 6.

En raison du fait que l'espacement des axes 6 est égal à l'espacement des encoches 8, les dents 9 délimitées par deux encoches successives 8 sont toujours travaillantes lors de la circulation de la chaîne 3 dans le sens des flèches 4.

En raison de la longueur importante de la chaîne 3, l'usure des dents 9 est beaucoup plus rapide que l'usure des axes 6 de la chaîne 3.

Il est connu de tailler sur la circonférence extérieure 10 d'un pignon 1 ou 2 un nombre impair de dents limitées par un nombre impair d'encoches ou de gorges. Les pignons moteurs à nombre de dents impair permettent en effet d'obtenir un décalage automatique de la chaîne de manutention, de manière à obtenir un décalage pour ne pas toujours faire travailler les mêmes dents du pignon.

Si cette disposition existante permet une certaine répartition de l'usure, elle n'est pas satisfaisante pour augmenter notablement la durée utile de travail du pignon moteur.

En référence à la figure 2, selon l'invention, un pignon moteur 11 ou roue dentée comporte un nombre de dents important, par exemple 16 dents, tandis que la chaîne de manutention 12 circulant dans le sens des flèches 13 en étant entraînée par un pignon moteur tournant dans le sens de la flèche 14 comporte un maillon 15 de longueur différente des autres maillons 16 de la chaîne 12.

La chaîne de manutention 12 est de préférence réalisée en matériaux métalliques; en particulier, le maillon 15 et les maillons 16 sont composés d'éléments métalliques.

Les maillons 16 sont limités chacun par deux axes 17 reliés par des plaques latérales 18. Le pas de la majorité des maillons 16 de la chaîne 12 est égal à l'espacement des axes 17 de ces maillons 16. Le maillon 15 de pas différent du pas de la majorité des maillons 16 comporte deux axes 17 reliés par au moins une plaque 19 de longueur différente de la longueur des plaques 18.

La roue dentée ou pignon moteur 11 comporte seize dents 20, chaque dent 20 étant limitée par deux encoches ou gorges 21 consécutives destinées à recevoir et entraîner des axes 17. Des repères facultatifs 22 ont été représentés sur la roue dentée 11 pour identifier la position de certaines encoches ou gorges 21. Ces repères facultatifs 22 permettent de vérifier le bon fonctionnement du mécanisme selon l'invention.

Sur la figure 2, les gorges ou encoches 21 situées à proximité des repères 22 ne sont pas travaillantes, car elles ne reçoivent aucun axe 17 de la chaîne de manutention 12. Au contraire, les gorges ou encoches 21 situées entre deux repères 22 sont effectivement travaillantes et entraînent des axes 17 de maillons 16 de la chaîne 12.

A titre d'exemple, la longueur ou pas du maillon 15 a été choisie égale à la moitié de la longueur ou pas d'un maillon 16 de la chaîne 12.

L'invention n'est pas limitée à cette disposition, mais couvre également toute variante dans laquelle le pas du maillon 15 différent du pas de la majorité des maillons 16 de la chaîne est une fraction du pas de la majorité des maillons 16 de la chaîne.

Par exemple, au lieu d'avoir un maillon de pas moitié du pas de la majorité des maillons de la chaîne, on peut prévoir un maillon de pas égal au tiers du pas de la majorité des maillons de la chaîne.

Egalement, au lieu de prévoir un maillon unique de pas différent du pas de la majorité des maillons de la chaîne, on peut prévoir plusieurs maillons de longueur fractionnée.

Il est également envisageable de prévoir un maillon de pas différent plus long que le pas de la majorité des maillons de la chaîne : dans ce cas, la fraction est une fraction supérieure à l'unité.

L'homme du métier, connaissant notamment la norme française enregistrée NFE 26-106, appréciera que le rapport entre le pas du maillon de pas différent et le pas de la majorité des maillons de la chaîne est déterminable par calcul au moyen de fonctions trigonométriques faisant intervenir l'enroulement sur le polygone primitif du pignon moteur ou roue dentée 11.

En effet, l'invention consiste à multiplier le nombre de dents d'un tourteau ou pignon moteur 1 ou 2 de la figure 1 pour arriver à un nombre de dents multiplié par un facteur qui n'est pas forcément un nombre entier, sous la condition que le résultat de la multiplication soit un nombre entier et pair de dents ou d'encoches ou gorges de réception d'axes de maillons de chaîne.

A titre d'exemple, si le pignon moteur initial comporte 6 dents régulièrement réparties le pas des maillons de la chaîne est égal au rayon du cercle circonscrit au polygone primitif d'entraînement.

Si l'on double le nombre de dents pour passer de 6 à 12 dents, le pas du petit maillon peut être obtenu en multipliant le rayon du cercle circonscrit au polygone primitif par le double du sinus d'un angle égal à 15°, ce qui conduit à une valeur approximative de 0,518 fois le rayon du cercle circonscrit au polygone primitif.

Dans cas où l'on triple le nombre de dents pour passer de 6 à 18 dents, un calcul analogue permet de déterminer que le pas du petit maillon est sensiblement égal à 0,35 fois le rayon du cercle circonscrit au polygone primitif.

Il est donc nécessaire de déterminer angulairement le rapport entre le pas du maillon de pas différent du pas de la majorité des maillons de la chaîne grâce à une construction trigonométrique simple, étant entendu que la fraction obtenue est voisine de l'inverse du nombre par lequel le nombre de dents du tourteau ou pignon moteur initial a été multiplié (0,518 est voisin de 1/2 ; et 0,35 est voisin de 1/3).

Sur les figures 3 et 4, l'entraînement de la chaîne 12 s'effectue par les encoches ou gorges 21 situées entre les repères 22. Chaque encoche ou gorge 21 située entre deux repères 22 est travaillante sur la demi-circonférence située du côté opposé au bras rectiligne de la chaîne 12.

Les maillons 16 entraînés présentent tous un pas identique.

Le maillon 19 vient en prise par son premier axe 17 saisi par une gorge 21 située entre deux repères 22 consécutifs.

Sur la figure 5, le deuxième axe 17 du maillon 19 a été engagé et est entraîné par une gorge 21 située directement en face d'un repère 22.

Comme on l'a vu, le pas du maillon 19 est égal dans cet exemple au pas d'un maillon 16 multiplié par le double du sinus de 15° d'angle, soit approximativement 0,518.

En raison du fait que le deuxième axe 17 du maillon 19 est entraîné par une encoche ou gorge 21 située sous le repère 22, le maillon 16 suivant engage son deuxième axe 17 dans une gorge 21 située également sous un repère 22.

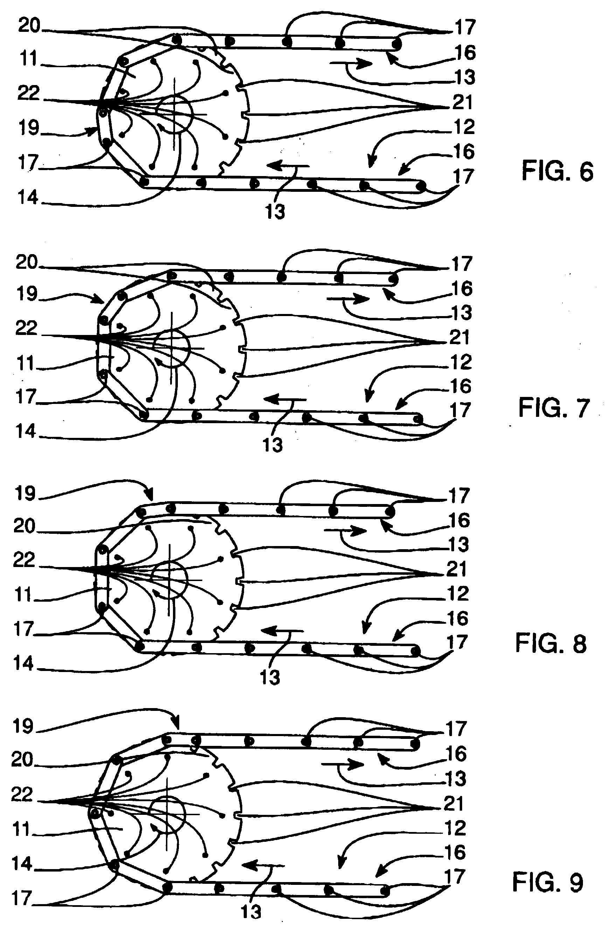

En référence aux figures 6 à 8, les maillons 16 qui suivent le maillon 19 dans le sens 13 d'entraînement de la chaîne de manutention 12 engagent également leurs axes 17 dans des gorges 21 situées directement sous les repères 22.

Le mouvement se continue dans le sens des flèches 13 pour les bras rectilignes et de la flèche 14 pour le mouvement de rotation du tourteau 11.

Sur la figure 9, le premier axe 17 du maillon différent 19 est dégagé du tourteau 11 tandis que les axes 17 de tous les maillons 16 de la majorité des maillons de la chaîne 12 sont entraînés par des gorges ou encoches 21 situées à proximité des repères 22 du pignon 11.

L'invention permet ainsi lors du passage du maillon 19 sur le pignon moteur 11 de décaler les maillons 16 de pas identique pour faire travailler une série de dents ou d'encoches différentes.

A chaque passage d'un maillon 19 de pas différent du pas de la majorité des maillons de la chaîne, on produit ainsi un décalage de dents travaillantes, ce qui permet de multiplier la durée utile de travail d'un pignon moteur ou tourteau par le nombre par lequel le nombre de dents initial d'un pignon 1 ou 2 a été multiplié.

L'homme du métier pourra ainsi déterminer le facteur de multiplication permettant d'assurer des maintenances périodiques plus espacées, ou d'obtenir des pignons moteurs ou tourteaux présentant une durée utile de travail sensiblement égale à la durée utile de travail de la chaîne de manutention.

L'invention décrite en référence à un mode de réalisation particulier n'y est nullement limitée mais couvre au contraire toute modification de forme et toute variante de réalisation dans le cadre et l'esprit de l'invention.

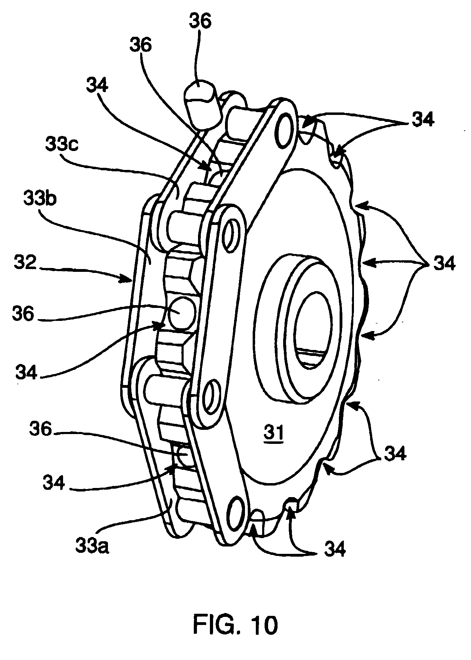

En référence à la figure 10, un mode préféré de réalisation d'un entraînement de chaîne de manutention selon l'invention comporte au moins une roue dentée 31 de pignon ou tourteau moteur réalisée essentiellement en matériau métallique.

La roue dentée 31 coopère avec une chaîne 32 de manutention selon l'invention comprenant des maillons 33a à 33c de même pas, et au moins un maillon non représenté de pas différent du pas des maillons 33a à 33c, de manière à provoquer un décalage des dents travaillantes.

Un logement 35 est prévu au fond de chaque gorge ou encoche 34 de la roue dentée 31 de pignon ou tourteau moteur, pour recevoir un insert 36 en matériau composite destiné à amortir ou diminuer le bruit produit par l'entraînement de chaîne de manutention.

Cette disposition permet ainsi de réduire les nuisances sonores subies par le voisinage, en particulier la nuit, lors d'un fonctionnement en continu du dispositif de manutention.

Cette disposition avantageuse de la présente invention peut être mise en oeuvre sans démontage de l'entraînement de chaîne de manutention selon l'invention grâce au fait que le décalage des dents travaillantes libère successivement chaque gorge ou encoche 34 de la roue dentée 31, dans laquelle il faut installer un nouvel insert 36 en matériau composite ou remplacer un insert 36 en matériau composite usagé.

En outre, le décalage des dents travaillantes procure une uniformité de l'usure des inserts 36 en matériau composite, ce qui permet de prévoir leur maintenance périodique en fonction des conditions ou des fréquences d'utilisation.

## Revendications

1. Dispositif de manutention par chaînes (12,32) et roues dentées (11,31) coopérantes, du type comportant au moins une chaîne (12,32) de manutention entièrement réalisée en matériaux métalliques et formant une bande fermée et une roue dentée (11,31) d'entraînement, caractérisé en ce que la roue dentée (11,31) comporte un nombre de dents disposées selon un espacement inférieur au pas de la majorité des maillons (16,33a-33c) de la chaîne (12,32) et en ce que la chaîne (12,32) entièrement réalisée en matériaux métalliques comporte au moins un maillon (19) de pas différent du pas de la majorité des maillons (16,33a-33c) de la chaîne (12,32), de manière à décaler les dents travaillantes en vue de réduire leur usure.

2. Dispositif selon la revendication 1, caractérisé en ce que le pas dudit maillon (19) de pas différent est sensiblement égal à l'espacement de deux dents consécutives de ladite roue dentée (11,31).

3. Dispositif selon la revendication 1 ou la revendication 2, caractérisé en ce que le pas dudit maillon (19) de pas différent est voisin d'une fraction du pas de la majorité des maillons (16,33a-33c) de la chaîne (12,32).

4. Dispositif selon l'une quelconque des revendications précédentes, caractérisé en ce que la roue dentée (11,31) comporte un nombre pair de dents espacées selon un espacement correspondant sensiblement au plus petit pas de maillon de la chaîne (12,32).

5. Dispositif selon l'une quelconque des revendications précédentes, caractérisé en ce que la roue dentée (11,31) comporte un nombre pair d'encoches (21,34) ou gorges d'entraînement d'axes (17) de maillons (16 ou 19) de chaîne (12,32).

6. Dispositif selon l'une quelconque des revendications précédentes, caractérisé en ce que la roue dentée (11,31) comporte un nombre de dents multiple du nombre de dents d'une roue dentée correspondant au pas de la majorité des maillons (16,33a-33c) de la chaîne (12,32).

7. Dispositif selon la revendication 6, caractérisé en ce que la roue dentée (11,31) comporte un nombre pair de dents.

8. Dispositif selon l'une quelconque des revendications précédentes, caractérisé en ce que ledit pas différent est inférieur au pas de la majorité des maillons (16,33a-33c) de la chaîne (12,32).

9. Dispositif selon la revendication 1, caractérisé en ce que ledit pas différent est supérieur au pas de la majorité des maillons (16,33a-33c) de la chaîne (12,32).

10. Dispositif selon la revendication 1, caractérisé en ce que le dispositif comporte au moins une roue dentée (31) comportant au moins un insert (36) en fond de gorge ou d'encoche (34), de manière à en amortir ou en réduire le bruit de fonctionnement.
